# EUROPÄISCHE PATENTANMELDUNG

(11) **EP 2 884 093 A1**
(43) Veröffentlichungstag der Anmeldung: **17.06.2015**
(21) Anmeldenummer: 14195852.0
(22) Anmeldetag: 02.12.2014
(51) Int. Cl.: F02M 65/00, G01L 19/00

(54) **Sensoreinrichtung zur Kraft- oder Druckerfassung, Verfahren zum Herstellen einer Sensoreinrichtung und Kraftstoffinjektor mit einer Sensoreinrichtung**

(30) Priorität: 10.12.2013 DE 102013225386
(71) Anmelder: Robert Bosch GmbH, 70442 Stuttgart (DE)
(72) Erfinder: Jupe, Michael, 71636 Ludwigsburg (DE)

(57) **Zusammenfassung**

Die Erfindung betrifft eine Sensoreinrichtung (10) zur Kraft- oder Druckerfassung, insbesondere in einem Kraftstoffinjektor (100), mit einem einen elektrischen Anschluss (53) aufweisenden Sensorelement (50) und einem mit dem Sensorelement (50) vorzugsweise an einer Stirnseite des Sensorelements (50) verbundenen Druckverteilerelement sowie einem Halteelement zum Positionieren und Fixieren des Druckverteilerelements zum Sensorelement (50), wobei das Halteelement das Sensorelement (50) an seinem Außenumfang zumindest teilweise radial umfasst. Erfindungsgemäß ist es vorgesehen, dass das Halteelement zusammen mit dem Druckverteilerelement als einstückiger Halte- und Druckübertragungskörper (45) ausgebildet und vorzugsweise als Sinterbauteil (46) ausgebildet ist.

## Beschreibung

### Stand der Technik

Die Erfindung betrifft eine Sensoreinrichtung zur Kraft- oder Druckerfassung nach dem Oberbegriff des Anspruchs 1. Ferner betrifft die Erfindung ein Verfahren zum Herstellen einer erfindungsgemäßen Sensoreinrichtung sowie einen Kraftstoffinjektor mit einer erfindungsgemäßen Sensoreinrichtung.

Aus der DE 10 2010 000 827 A1 der Anmelderin ist es bereits bekannt, einen Kraftstoffinjektor mit einer Sensoreinrichtung zur Kraft- oder Druckerfassung auszurüsten, bei der der in einem Steuerraum eines Injektorgehäuses herrschende Kraftstoffdruck erfassbar ist. Dadurch lässt sich auf den Öffnungs- bzw. Schließzeitpunkt eines Einspritzglieds (Düsennadel) schließen, so dass die Betriebsphasen der Kraftstoffeinspritzung exakt erfassbar sind. Hierzu wird die Bewegung eines Schließgliedes, das der Beeinflussung des Abflusses von Kraftstoff aus dem Steuerraum dient, über eine Druckmembran an eine Sensoreinrichtung übertragen, die in einer geeigneten Ausnehmung des Kraftstoffinjektors angeordnet ist.

Aus der Praxis ist bereits eine Sensoreinrichtung mit den Merkmalen des Oberbegriffs des Anspruchs 1 bekannt, die aus mehreren Teilen bzw. Bauelementen besteht. Insbesondere weist die bekannte Sensoreinrichtung ein Druckverteilerelement in Form einer scheibenförmigen Platte auf, die zur Kraftübertragung bzw. Krafteinleitung von der Druckmembran auf ein Sensorelement dient, das als Piezoelement ausgebildet ist. Um das Druckverteilerelement zum Sensorelement zu positionieren bzw. zu fixieren, findet ein aus Kunststoff bestehender, ringförmiger Haltekörper Verwendung, der beispielsweise durch bereichsweises Umspritzen der angesprochenen Bauteile diese zueinander in ihrer Soll-Position fixiert. Darüber hinaus weist das Sensorelement elektrische Anschlussleitungen auf, die, um einerseits einen elektrischen Kurzschluss mit dem aus Metall bestehenden Gehäuse des Kraftstoffinjektors und andererseits ein Eindringen von Kraftstoff in den Bereich des Sensorelements zu vermeiden, von einem Isolierkörper umgeben sind. Aufgrund der unterschiedlichen Temperaturausdehnungskoeffizienten zwischen dem aus Metall bestehenden Gehäuse des Kraftstoffinjektors und dem Isolationskörper ist es darüber hinaus erforderlich, zwischen dem Isolationskörper und dem Gehäuse einen Dichtstoff anzubringen, um das Eindringen von Kraftstoff in den Bereich der Sensoreinrichtung sicher zu vermeiden. Eine soweit vorbekannte Sensoreinrichtung ist durch die Vielzahl der Bauteile sowie die angesprochene Dichtheitsproblematik herstellungstechnisch relativ aufwändig ausgebildet.

### Offenbarung der Erfindung

Ausgehend von dem dargestellten Stand der Technik liegt der Erfindung die Aufgabe zugrunde, eine Sensoreinrichtung zur Kraft- oder Druckerfassung, insbesondere in einem Kraftstoffinjektor, nach dem Oberbegriff des Anspruchs 1 derart weiterzubilden, dass eine herstellungstechnisch verbesserte Ausgestaltung erzielbar ist. Diese vorteilhafte Ausgestaltung soll sich insbesondere in geringeren Herstellkosten sowie in einer konstruktionsbedingt erhöhten Zuverlässigkeit, ohne die Notwendigkeit spezieller Dichtmaßnahmen, äußern. Diese Aufgabe wird erfindungsgemäß bei einer Sensoreinrichtung zur Kraft- oder Druckerfassung mit den Merkmalen des Anspruchs 1 dadurch gelöst, dass das Halteelement zusammen mit dem Druckverteilerelement als einstückiger Halte- und Druckübertragungskörper, vorzugsweise als Sinterbauteil, ausgebildet ist.

Mit anderen Worten gesagt bedeutet dies, dass eine Bauteilereduzierung gegenüber dem Stand der Technik dadurch erzielt wird, dass anstelle eines Haltekörpers und eines von dem Haltekörper separaten Druckverteilerelements diese beiden Bauteile als einstückiger Halte- und Druckübertragungskörper ausgebildet ist, der vorzugsweise als Sinterbauteil ausgebildet sind. Die Verwendung eines Sinterbauteils hat insbesondere den Vorteil, dass es die Funktionalität hinsichtlich der benötigten Druckübertragung einerseits, und die mechanische Robustheit sowie herstellungstechnisch einfache und kostengünstige Ausbildung andererseits ermöglicht.

Vorteilhafte Weiterbildungen der erfindungsgemäßen Sensoreinrichtung zur Kraft- oder Druckerfassung sind in den Unteransprüchen aufgeführt.

In ganz besonders bevorzugter konstruktiver Ausgestaltung der Sensoreinrichtung ist es vorgesehen, dass der Halte- und Druckübertragungskörper eine vorzugsweise sacklochartige Aufnahme für das Sensorelement aufweist, die das Sensorelement mit einem radial umlaufenden Wandabschnitt, vorzugsweise über die gesamte Höhe des Sensorelements, radial umfasst, und dass zwischen dem Wandabschnitt und dem Sensorelement eine Klemmschlussverbindung ausgebildet ist. Eine derartige Ausbildung ermöglicht es somit, ohne zusätzliche Hilfsstoffe wie Klebstoff usw. den Halteund Druckübertragungskörper bzw. das Sinterbauteil mit dem Sensorelement zu verbinden. Fertigungstechnisch lässt sich somit ein Prozessschritt des Klebens einsparen, so dass eine besonders kostengünstige Herstellbarkeit sichergestellt ist. Unter Verzicht der o.g. Ausbildung mit der Klemmschlussverbindung zwischen dem Halte- und Druckübertragungskörper und dem Sensorelement ist es selbstverständlich möglich, den Halte- und Druckübertragungskörper beispielsweise mit einer Klebeverbindung mit dem Sensorelement zu verbinden.

Eine weitere, besonders bevorzugte Ausgestaltung der Erfindung sieht vor, dass der elektrische Anschluss des Sensorelements, einen Anschlussbereich zumindest auf der dem Sensorelement abgewandten Seite freilassend, von einem Isolationskörper umgeben ist, und dass der Isolationskörper Bestandteil des Halteelements ist und einstückig von diesem gebildet ist. Somit findet gegenüber dem Stand der Technik eine weitere Bauteilereduzierung statt, indem die beim Stand der Technik separaten Bauteile (Halteelement sowie elektrischer Isolationskörper für den elektrischen Anschluss) durch ein einteiliges Bauteil in Form des Halte- und Druckübertragungskörpers ersetzt werden. Auch diese Maßnahme bewirkt eine zusätzliche Reduzierung der Herstellkosten durch den Entfall zusätzlicher Montage- bzw. Fertigungsschritte.

Besonders bevorzugt ist die Verwendung von keramischem Material für den Halte- und Druckübertragungskörper, wenn dieser als Sinterbauteil ausgebildet ist. Die Verwendung der Keramik ermöglicht bei hoher Temperaturbeständigkeit die benötigten Kraft- bzw. Druckübertragungseigenschaften sowie die Möglichkeit zur Ausbildung des Klemmschlusses.

In weiterer konstruktiv bevorzugter Ausgestaltung ist es vorgesehen, dass der elektrische Anschluss auf der dem Sensorelement zugewandten Seite zumindest bereichsweise frei von dem Isolationskörper ist und an einem elektrisch leitenden Bereich des Sensorelements anliegt. Es wird somit die Möglichkeit geschaffen, den elektrischen Anschluss ohne eine zusätzlich Verbindungsmaßnahme, wie Löten, Schweißen o.ä. mit dem Sensorelement alleine durch Anlagekontakt elektrisch leitend zu verbinden. Diese Verbindung lässt sich insbesondere bei dem in dem Sinterbauteil integral angeordneten elektrischen Anschluss dadurch ausbilden, indem bei dem Verbinden des Sensorelements mit dem Halteelement durch Eindrücken in die Aufnahme des Halteelements (Klemmschlussverbindung) gleichzeitig die benötigte Anlagekraft zwischen dem elektrischen Anschluss und dem elektrisch leitenden Bereich des Sensorelements hergestellt wird.

Eine weitere Vereinfachung sieht vor, dass das Sensorelement auf der dem Halte- und Druckübertragungskörper abgewandten Stirnseite einen weiteren elektrisch leitenden Bereich aufweist, der dazu ausgebildet ist, mit einem metallischen Bereich eines Aufnahmekörpers, insbesondere eines Injektorgehäuses eines Kraftstoffinjektors, durch Anlagekontakt an dem Aufnahmekörper zumindest mittelbar eine elektrische Masseverbindung auszubilden.

Die Erfindung umfasst auch ein Verfahren zum Herstellen einer erfindungsgemäßen Sensoreinrichtung, bei der das Halteelement zusammen mit dem Druckverteilerelement als einstückiger Halte- und Druckübertragungskörper ausgebildet ist. Das erfindungsgemäße Verfahren sieht zumindest folgende Schritte vor: In einem ersten Schritt wird der Halte- und Druckübertragungskörper vorzugsweise in einem Sinterverfahren hergestellt und anschließend wird in einem zweiten Schritt ein Sensorelement in eine Aufnahme des Halte- und Druckübertragungskörpers eingedrückt, wobei durch eine Klemmschlussverbindung zwischen dem Halte- und Druckübertragungskörper und dem Sensorelement die Verbindung ausgebildet wird.

Besonders bevorzugt ist ein Verfahren, bei dem beim Herstellen des Halte- und Druckübertragungskörpers gleichzeitig ein einen elektrischen Anschluss bereichsweise umgebender Isolationskörper ausgebildet wird.

Weiterhin umfasst die Erfindung einen Kraftstoffinjektor, insbesondere für selbstzündende Brennkraftmaschinen, unter Verwendung einer erfindungsgemäßen Sensoreinrichtung. Ein derartiger Kraftstoffinjektor hat den Vorteil, dass die Sensoreinrichtung sich herstellungstechnisch besonders einfach und preiswert herstellen lässt und somit eine effiziente und mit wenig Aufwand verbundene Erkennung der Bewegung eines Einspritzventilglieds (Düsennadel) ermöglicht wird.

Bei einer konstruktiven Ausgestaltung des Kraftstoffinjektors ist es vorgesehen, dass die Sensoreinrichtung innerhalb einer Sensorausnehmung eines Injektorgehäuses aufgenommen ist, wobei die Sensorausnehmung auf der dem Sensorelement abgewandten Seite mittels eines zumindest bereichsweise elastischen Druckübertragungselements verschlossen ist, und dass mittels des Druckübertragungselements zumindest mittelbar eine in Richtung des Sensorelements wirkende axiale Spannkraft erzeugbar ist, die eine elektrische Kontaktierung des Sensorelements ausbildet. Eine derartige Ausbildung des Kraftstoffinjektors ermöglicht es, bei der Montage der Sensoreinrichtung in die Sensorausnehmung ohne zusätzliche Verbindungen gleichzeitig die elektrische Verbindung des Sensorelements auszubilden.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen Teilbereich eines Kraftstoffinjektors einer selbstzündenden Brennkraftmaschine unter Verwendung einer erfindungsgemäßen Sensoreinrichtung und
- Fig. 2: ein Detail der Fig. 1 im Bereich der erfindungsgemäßen Sensoreinrichtung im Längsschnitt, wobei die Teile der Sensoreinrichtung zur Erkennbarkeit der einzelnen Teile teilweise etwas voneinander beabstandet dargestellt sind.

Gleiche Elemente bzw. Elemente mit gleicher Funktion sind in den Figuren mit den gleichen Bezugsziffern versehen.

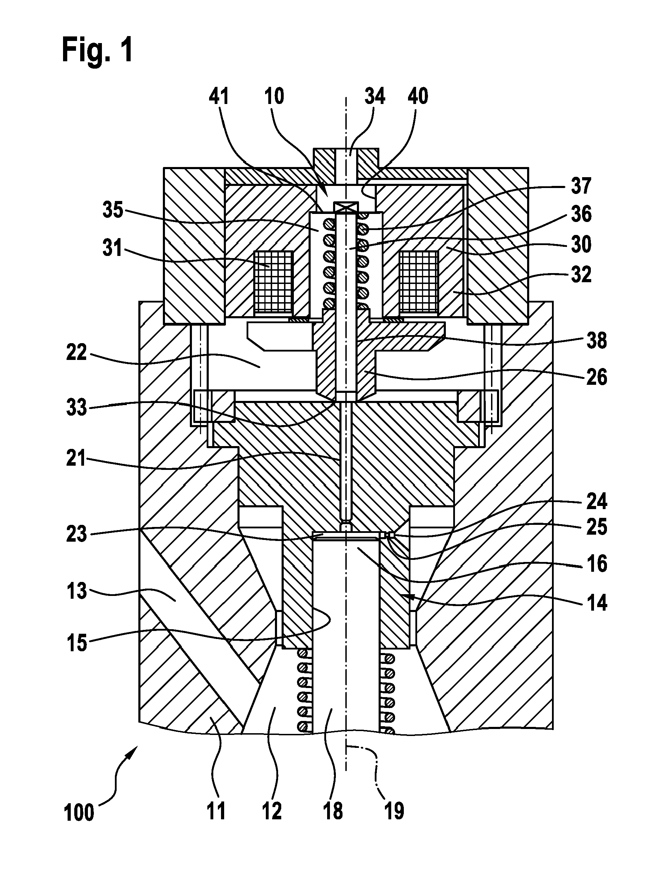

In der Fig. 1 ist ein Kraftstoffinjektor 100 bereichsweise dargestellt, wie er als Bestandteil eines sogenannten Common-Rail-Einspritzsystems bei selbstzündenden Brennkraftmaschinen verwendet wird. Der Kraftstoffinjektor 100 weist ein lediglich bereichsweise dargestelltes Injektorgehäuse 11 auf, in dem ein Hochdruckraum 12 ausgebildet ist. Der Hochdruckraum 12 ist über einen Zulaufkanal 13 mit einer nicht dargestellten Hochdruckquelle (Rail) hydraulisch verbunden. Innerhalb des Hochdruckraums 12 ist ein Ventilstück 14 angeordnet, das in einer Stirnseite eine sacklochförmige Ausnehmung 15 aufweist. In die Ausnehmung 15 taucht der eine axiale Endbereich 16 einer als Einspritzglied dienenden Düsennadel 18 ein, wobei der dem einen Endbereich 16 abgewandte andere Endbereich (nicht dargestellt) der Düsennadel 18 dazu ausgebildet ist, in einer Schließposition der Düsennadel 18 in dem Injektorgehäuse 11 ausgebildete Einspritzöffnungen freizugeben, um Kraftstoff aus dem Hochdruckraum 12 in den Brennraum der Brennkraftmaschine einzuspritzen, und in einer abgesenkten Schließposition die Einspritzöffnungen zu verschließen. Hierzu ist die Düsennadel 18 in Richtung ihrer Längsachse 19 hubbeweglich angeordnet.

Fluchtend zur Längsachse 19 ist in dem Ventilstück 14 ein Ablaufkanal 21 ausgebildet, der vom Grund der Ausnehmung 15 ausgeht und in einem Niederdruckraum 22 innerhalb des Injektorgehäuses 11 mündet. Das Ventilstück 14 begrenzt in bekannter Art und Weise zusammen mit der einen Stirnfläche des Endbereichs 16 der Düsennadel 18 einen Steuerraum 23. Der Steuerraum 23 ist über eine Zulaufbohrung 24 mit integrierter Zulaufdrossel 25 mit dem Hochdruckraum 12 hydraulisch verbunden. Durch die Regelung eines Abflusses von Kraftstoff aus dem Steuerraum 23 über den Ablaufkanal 21 in den Niederdruckraum 22 wird in bekannter Art und Weise die Hubbewegung der Düsennadel 18 gesteuert. Hierzu ist innerhalb des Niederdruckraums 22 ein als Schließglied für den Ablaufkanal 21 dienender Schließkörper 26 angeordnet, der Bestandteil eines Magnetaktuators 30 ist. Der Schließkörper 26 wirkt mit einer Magnetspule 31 zusammen, die innerhalb einer radialen Aussparung eines Magnetkerns 32 eingesetzt ist. In der dargestellten abgesenkten Position des Schließkörpers 26 sitzt dieser mit einer Dichtkante 33 unter Ausbildung eines Dichtsitzes auf der dem Schließkörper 26 zugewandten Stirnseite des Ventilstücks 14 auf und verhindert einen Abfluss von Kraftstoff aus dem Steuerraum 23 in den Niederdruckraum 22. Der Niederdruckraum 22 ist auf der dem Schließkörper 26 abgewandten Seite des Magnetkerns 32 mit einer Rücklaufleitung 34 hydraulisch verbunden.

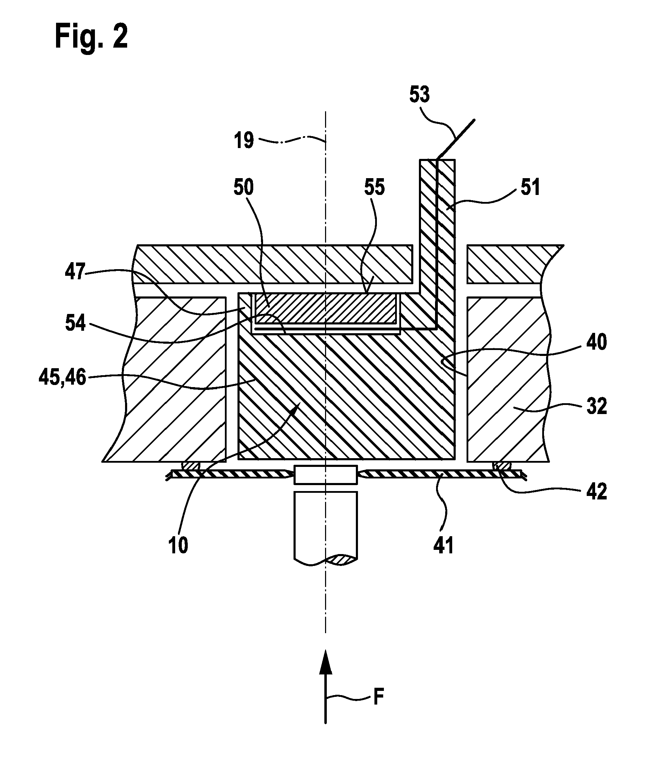

Der Magnetkern 32 weist eine Ausnehmung 35 auf, in der eine als Führungsglied für den Schließkörper 26 dienende Führungsstange 36 angeordnet ist. Die Führungsstange 36 ist radial von einer Druckfeder 37 umgeben, die den Schließkörper 26 in Richtung des Ventilstücks 14 kraftbeaufschlagt. Wesentlich ist, dass die Führungsstange 36 längsverschiebbar in einer Durchgangsbohrung 38 des Schließkörpers 26 angeordnet ist, so dass der in dem Steuerraum 23 wirkende hydraulische Druck über den Ablaufkanal 21 auf die dem Ventilstück 14 zugewandte Stirnfläche der Führungsstange 36 wirkt und diese stets vom Ventilstück 14 mit einer Kraft F wegdrückt (Fig. 2). Diese hydraulische Kraft F, aus deren Höhe auf den in dem Steuerraum 23 herrschenden Druck und somit auf die Position der Düsennadel 18 geschlossen wird, wird mittels einer erfindungsgemäßen Sensoreinrichtung 10 erfasst.

Wie insbesondere anhand der Fig. 2 erkennbar ist, bei der einzelne Teile der Sensoreinrichtung 10 der besseren Erkennbarkeit halber etwas voneinander beabstandet dargestellt sind, ist die Sensoreinrichtung 10 innerhalb einer Sensorausnehmung 40, die lediglich beispielhaft in dem Magnetkern 32 ausgebildet ist, angeordnet bzw. aufgenommen. Die Sensorausnehmung 40 ist auf der der Führungsstange 36 zugewandten Seite mittels einer Druckmembran 41 hydraulisch dicht verschlossen, die ihrerseits beispielhaft mittels einer radial umlaufenden Laserverschweißung 42 mit einem Teilbereich des Magnetkerns 32 verbunden ist. Die Druckmembran 41 ist in ihrem mittleren, zentralen Bereich in Richtung der Längsachse 19 zumindest um den Hub der Führungsstange 36 flexibel bzw. beweglich angeordnet.

Die Sensoreinrichtung 10 umfasst erfindungsgemäß einen kombinierten, einstückig ausgebildeten Halte- und Druckübertragungskörper 45. Der Halte- und Druckübertragungskörper 45 besteht aus keramischem Material und ist als Sinterbauteil 46 ausgebildet. Der vorzugsweise eine runde Querschnittsfläche aufweisende Halte- und Druckübertragungskörper 45 weist auf der der Druckmembran 41 abgewandten Seite einen radial umlaufenden Wandabschnitt 47 auf, der ein als Piezoelement ausgebildetes Sensorelement 50 radial umfasst, das an der dem Halte- und Druckübertragungskörper 45 zugewandten Stirnseite des an diesem anliegt. Vorzugsweise sind die Dimensionierung des Wandabschnitts 47 bzw. des Sensorelements 50 derart aufeinander abgestimmt, dass zwischen dem Wandabschnitt 47, der vorzugsweise über die gesamte Höhe des Sensorelements 50 verläuft, und dem Sensorelement 50 eine Klemmschlussverbindung ausgebildet ist. Ferner weist der Halte- und Druckübertragungskörper 45 einen Isolationskörper 51 auf, der einstückig am Halte- und Druckübertragungskörper 45 angeformt ist bzw. Bestandteil des Sinterbauteils 46 ist. Der Isolationskörper 51 nimmt bereichsweise einen als Flachstecker ausgebildeten elektrischen Anschluss 53 auf, der innerhalb der von dem Wandabschnitt 47 begrenzten, sacklochförmigen Ausnehmung 54 des Halte- und Druckübertragungskörpers 45 auf der dem Sensorelement 50 zugewandten Seite zumindest bereichsweise elektrisch leitend ausgebildet ist und dort an einem entsprechenden elektrisch leitenden Bereich des Sensorelements 50 anliegt. Darüber hinaus liegt das Sensorelement 50 auf der dem elektrischen Anschluss 53 gegenüberliegenden Stirnseite mit einem Flächenabschnitt 55, der elektrisch leitend ausgebildet ist, zumindest mittelbar zur Ausbildung einer elektrischen Masseverbindung am Injektorgehäuse 11 an.

Die erfindungsgemäße Sensoreinrichtung 10 wird dadurch hergestellt, dass in einem ersten Fertigungsschritt der Halte- und Druckübertragungskörper 45 zusammen mit dem Isolationskörper 51 im Sinterverfahren hergestellt wird, wobei der elektrische Anschluss 53 bereichsweise von dem Sinterkörper 46, die elektrischen Anschlussbereiche des elektrischen Anschlusses 53 freilassend, umschlossen bzw. umgeben ist. Anschließend wird das Sensorelement 50 in die Ausnehmung 54 eingedrückt, wobei durch die Klemmschlussverbindung einerseits ein Herausfallen des Sensorelements 50 aus dem Halte- und Druckübertragungskörper 45 vermieden wird, und andererseits vorzugsweise der elektrische Anschluss 53 in elektrisch leitendem Kontakt mit dem Sensorelement 50 gelangt. Die soweit vorgefertigte Sensoreinrichtung 10 wird anschließend in die Sensorausnehmung 40 des Injektorgehäuses 11 eingebracht und mittels der Druckmembran 41 verschlossen. Dabei gelangt das Sensorelement 50 mit der dem elektrischen Anschluss 53 gegenüberliegenden Stirnseite in elektrisch leitendem Kontakt mit dem Injektorgehäuse 11.

Beim Betrieb des Kraftstoffinjektors 100 wird von der Führungsstange 36 die Kraft F über die Druckmembran 41 auf den Halte- und Druckübertragungskörper 45 übertragen und von dem Sensorelement 50 erfasst.

Die soweit beschriebene Sensoreinrichtung 10 bzw. der Kraftstoffinjektor 100 können in vielfältiger Art und Weise abgewandelt bzw. modifiziert werden, ohne vom Erfindungsgedanken abzuweichen.

## Patentansprüche

1. Sensoreinrichtung (10) zur Kraft- oder Druckerfassung, insbesondere in einem Kraftstoffinjektor (100), mit einem einen elektrischen Anschluss (53) aufweisenden Sensorelement (50) und einem mit dem Sensorelement (50) vorzugsweise an einer Stirnseite des Sensorelements (50) verbundenen Druckverteilerelement sowie einem Halteelement zum Positionieren und Fixieren des Druckverteilerelements zum Sensorelement (50), wobei das Halteelement das Sensorelement (50) an seinem Außenumfang zumindest teilweise radial umfasst,
**dadurch gekennzeichnet,**
**dass** das Halteelement zusammen mit dem Druckverteilerelement als einstückiger Halte- und Druckübertragungskörper (45) ausgebildet und vorzugsweise als Sinterbauteil (46) ausgebildet ist.

2. Sensoreinrichtung nach Anspruch 1,
**dadurch gekennzeichnet,**
**dass** der Halte- und Druckübertragungskörper (45) eine vorzugsweise sacklochartige Aufnahme (54) für das Sensorelement (50) aufweist, die das Sensorelement (50) mit einem radial umlaufenden Wandabschnitt (47), vorzugsweise über die gesamte Höhe des Sensorelements (50), radial umfasst, und dass zwischen dem Wandabschnitt (47) und dem Sensorelement (50) eine Klemmschlussverbindung ausgebildet ist.

3. Sensoreinrichtung nach Anspruch 1 oder 2,
**dadurch gekennzeichnet,**
**dass** der elektrische Anschluss (53), einen Anschlussbereich für das Sensorelement (50) zumindest auf der dem Sensorelement (50) abgewandten Seite freilassend, von einem Isolationskörper (51) umgeben ist, und dass der Isolationskörper (51) Bestandteil des Halte- und Druckübertragungskörpers (45) ist und einstückig von diesem gebildet ist.

4. Sensoreinrichtung nach einem der Ansprüche 1 bis 3,
**dadurch gekennzeichnet,**
**dass** der Halte- und Druckübertragungskörper (45) als Sinterbauteil (46) ausgebildet ist und zumindest im Wesentlichen aus keramischem Material besteht.

5. Sensoreinrichtung nach Anspruch 3 oder 4,
**dadurch gekennzeichnet,**
**dass** der elektrische Anschluss (53) auf der dem Sensorelement (50) zugewandten Seite zumindest bereichsweise frei von dem Isolationskörper (51) ist und an einem elektrisch leitenden Bereich des Sensorelements (50) anliegt.

6. Sensoreinrichtung nach einem der Ansprüche 1 bis 5,
**dadurch gekennzeichnet,**
**dass** das Sensorelement (50) auf der dem Halte- und Druckübertragungskörper (45) abgewandten Stirnseite einen weiteren elektrisch leitenden Bereich (55) aufweist, der dazu ausgebildet ist, mit einem metallischen Bereich eines Aufnahmekörpers, insbesondere eines Injektorgehäuses (11) eine Kraftstoffinjektors (100), durch Anlagekontakt an dem Aufnahmekörper zumindest mittelbar eine elektrische Masseverbindung auszubilden.

7. Verfahren zum Herstellen einer Sensoreinrichtung (10) nach einem der Ansprüche 1 bis 6, umfassend zumindest folgende Schritte:
- Herstellen eines Halte- und Druckübertragungskörper (45), vorzugsweise im Sinterverfahren
- Eindrücken eines Sensorelements (50) in eine Aufnahme (54) des Halteund Druckübertragungskörpers (45) zur Ausbildung einer Klemmschlussverbindung zwischen dem Halte- und Druckübertragungskörper (45) und dem Sensorelement (50).

8. Verfahren nach Anspruch 7,
**dadurch gekennzeichnet,**
**dass** beim Herstellen des Halte- und Druckübertragungskörpers (45) gleichzeitig ein einen elektrischen Anschluss (53) bereichsweise umgebender Isolationskörper (51) ausgebildet wird.

9. Kraftstoffinjektor (100), insbesondere für selbstzündende Brennkraftmaschinen, mit einer Sensoreinrichtung (10) nach einem der Ansprüche 1 bis 8.

10. Kraftstoffinjektor nach Anspruch 9,
**dadurch gekennzeichnet,**
**dass** die Sensoreinrichtung (10) innerhalb einer Sensorausnehmung (40) eines Injektorgehäuses (11) aufgenommen ist, wobei die Sensorausnehmung (40) auf der dem Sensorelement (50) abgewandten Seite mittels eines zumindest bereichsweise elastischen Druckübertragungselements (41) verschlossen ist, und dass mittels des Druckübertragungselements (41) zumindest mittelbar eine in Richtung des Sensorelements (50) wirkende axiale Spannkraft erzeugbar ist, die eine elektrische Kontaktierung des Sensorelements (50) ausbildet.
